# EUROPÄISCHE PATENTSCHRIFT

(11) **EP 0 832 019 B1**
(45) Veröffentlichungstag und Bekanntmachung des Hinweises auf die Patenterteilung: **09.06.1999**
(21) Anmeldenummer: 96924784.0
(22) Anmeldetag: 31.07.1996
(51) Int. Cl.: B60T 8/32

(54) **HYDRAULISCHE FREMDKRAFTFAHRZEUGBREMSANLAGE MIT WENIGSTENS EINEM ELEKTRISCH STEUERBAREN VENTIL**
HYDRAULIC VEHICLE BRAKING SYSTEM ACTUATED BY AN EXTERNAL FORCE, WITH AT LEAST ONE ELECTRICALLY CONTROLLABLE VALVE
SYSTEME DE FREINAGE HYDRAULIQUE POUR VEHICULE, ACTIONNE PAR UNE FORCE EXTERIEURE ET COMPORTANT AU MOINS UNE SOUPAPE A COMMANDE ELECTRIQUE

(30) Priorität: 22.12.1995 DE 19548207
(43) Veröffentlichungstag der Anmeldung: 01.04.1998
(73) Patentinhaber: ROBERT BOSCH GMBH, 70442 Stuttgart (DE)
(72) Erfinder: SCHMIDT, Günther, D-97941 Tauberbischofsheim (DE); WINNER, Hermann, D-76229 Karlsruhe (DE); GAILLARD, Alain, D-76133 Karlsruhe (DE)
(86) Internationale Anmeldenummer: DE9601417
(87) Internationale Veröffentlichungsnummer: WO9723372

(56) Entgegenhaltungen:
- WO-A-93/08055
- WO-A-95/14595
- DE-A- 1 961 039
- DE-A- 4 029 793
- GB-A- 2 129 890
- US-A- 3 802 745

## Beschreibung

### Stand der Technik

Die Erfindung geht aus von einer hydraulischen Fremdkraftfahrzeugbremsanlage nach der Gattung des Hauptanspruchs.

Durch das Dokument US 3,802,745A ist eine die Gattung bildende hydraulische Fremdkraftfahrzeugbremsanlage bekannt mit einem Reservoir, einer Pumpe, einem Pumpendruckregulierventil, wenigstens einem von der Pumpe füllbaren Fremdenergiespeicher, der als ein mit einer Trennmembran ausgerüsteter und einer Polstergasfüllung versehener Hydrospeicher ausgebildet ist, und zwischen dem Fremdenergiespeicher und beispielsweise einer Radbremse einer Ventilanordnung, die elektrisch steuerbar ist zum Verbinden der wenigstens einen Radbremse mit dem Fremdenergiespeicher, mit einem der wenigstens einen Radbremse zugeordneten Radbremsdrucksensor, mit einem Bremspedal, mit einem mittels des Bremspedals einstellbaren Potentiometer als Sollwertgeber für einen Radbremsdruck und mit einem Steuergerät, das an den Sollwertgeber und an den Radbremsdrucksensor angeschlossen ist und eingerichtet ist zum Steuern der Ventilanordnung derart, daß durch Verbinden der wenigstens einen Radbremse mit der Fremdenergiequelle Radbremsdruckanstieg bis zum Erreichen des Sollwertes und Radbremsdruckabstieg beim Loslassen des Bremspedals durch Verbinden der Radbremse mit dem Reservoir möglich ist. Dabei weist diese Ventilanordnung eines an sich bekannten und deshalb nicht beschriebenen Typs drei Anschlüsse auf. Beispielsweise ist es möglich, mehrere solcher Ventilanordnungen vorzusehen, damit beispielsweise jede Radbremse eines jeden Rades des Fahrzeugs eine eigene Ventilanordnung aufweist. Durch Anordnung von Raddrehungssensoren und Weiterbildung des Steuergerätes ist es möglich, gegen einen mittels des Bremspedals vorgegebenen Sollwert Radbremsdrücke so einzustellen, daß ein Blockieren von Fahrzeugrädern vermieden wird. Als nachteilig kann angesehen werden der technische Aufwand für das Pumpendruckregulierventil, das bei angetriebener Pumpe und vollgeladenem Hydrospeicher und nicht betätigtem Bremspedal im Überschuß gefördertes Druckmittel zum Reservoir leitet.

Von der hydraulischen Fremdkraftfahrzeugbremsanlage gemäß der genannten US 3,802,745 unterscheidet sich eine durch die DE 19 61 039 A1 bekannte hydraulische Fremdkraftfahrzeugbremsanlage durch Weglassung eines Pumpendruckbegrenzungsventils und dafür den Einbau eines Druckschalters zum Ausschalten eines die Pumpe antreibenden Elektromotors dann, wenn der Fremdenergiespeicher ausreichend geladen ist. Die Anordnung des Druckschalters und des Elektromotors hat einerseits den Vorteil, daß die Pumpe nur so lange arbeitet, bis der Fremdenergiespeicher ausreichend gefüllt ist. Andererseits hat aber die Anordnung eines solchen Druckschalters den Nachteil, daß bei einem gegebenenfalls nicht ausschließbaren Verschweißen von Kontaktelementen der Elektromotor nicht mehr abschaltbar ist mit der Folge von Überlastung oder gar Zerstörung des Elektromotors, der Pumpe oder anderer Bestandteile der Fremdkraftfahrzeugbremsanlage. Neben der Verwendung von Ventilen mit drei Anschlüssen zwischen der Fremdenergiequelle, einem Radbremszylinder und dem Reservoir offenbart die DE 19 61 039 A1 auch die Anordnung eines mit zwei Anschlüssen versehenen und für zwei Stellungen eingerichteten elektromagnetisch steuerbaren Wegeventils zwischen der Fremdenergiequelle und dem Radbremszylinder und eines zweiten 2-Anschlüsse-2-Stellungs-Wegeventils zwischen diesem Radbremszylinder und dem Reservoir. Dabei sind beide 2-Anschlüsse-Ventile mit Schließfedern ausgestattet und in ihren Normalstellungen geschlossen.

Durch die DE 40 29 793 A1 ist es bekannt, innerhalb einer mit Fremdenergie betreibbaren Fahrzeugbremsanlage notwendige 2/2-Wegeventile, die zum Einstellen von Radbremsdrücken unter Zuhilfenahme von Radbremsdrucksensoren bestimmt sind, zur Vermeidung von Leckströmen als Sitzventile auszubilden. Dies erhöht die Betriebssicherheit der Fremdkraftfahrzeugbremsanlage insbesondere dann, wenn bei Ausfall der Fremdenergie unter Verwendung eines mittels eines Pedals betätigbaren Hauptbremszylinders Bremswirkung zu erzeugen ist.

### Vorteile der Erfindung

Die erfindungsgemäße hydraulische Fremdkraftfahrzeugbremsanlage mit den kennzeichnenden Merkmalen des Anspruchs 1 hat den Vorteil, daß auf den Einbau eines Pumpendruckregulierventils, wie dies die US 3,802,745 lehrt, verzichtet werden kann, weil die erfindungsgemäß ausgebildete Feder zusammen mit dem Schließglied und dem an die Fremdenergiequelle angeschlossenen Ventilsitz des zum Bremsen dienenden Ventils wenigstens bei unbetätigtem Bremspedal die Funktion eines Pumpendruckregulierventils übernimmt. Wenn trotz der kennzeichnenden Merkmale des Anspruchs 1 ein Druckschalter gemäß der DE 19 61 039 A1 einem die Pumpe antreibenden Elektromotor zugeordnet wird, werden der Elektromotor und die Pumpe der Fremdkraftbremsanlage zwischen Bremsvorgängen geschont. Dabei wird auch Energie gespart.

Durch die in den Unteransprüchen angegebenen Maßnahmen sind vorteilhafte Weiterbildungen und Verbesserungen der im Anspruch 1 angegebenen hydraulischen Fremdkraftfahrzeugbremsanlage möglich.

Die kennzeichnenden Merkmale des Anspruchs 2 ergeben den Vorteil, daß ein Radbremsdruck per wenigstens teilweises Zurücklassen des Bremspedals in Richtung seiner Ausgangsstellung zumindest verkleinerbar ist.

Die kennzeichnenden Merkmale des Anspruchs 3 ergeben den Vorteil, daß infolge einer Einstellung der Andrückung des zweiten Schließkörpers an den Ventilsitz des zweiten Ventils infolge der gesteuerten oder geregelten Einstellung des zweiten Erregungsstromes ein Druckmittelabfluß zum Reservoir dann möglich ist, wenn bei Beibehaltung des ersten Erregungsstromes während eines Bremsvorgangs die Fremdenergiequelle überschüssiges Druckmittel liefert, das eine Durchströmung des ersten Ventilsitzes zur Folge hat. Hierbei ist in einer die Erfindung stützenden Weise auch der Ventilsitz des zweiten Ventiles durchströmbar, so daß die Fremdenergiequelle vor Überlastung schützbar ist.

Die kennzeichnenden Merkmale des Anspruchs 4 ergeben den Vorteil, daß beispielsweise mehrere Fahrzeugräder unabhängig voneinander bremsbar sind, so daß beispielsweise, wie dies die US 3,802,745 bereits lehrt, bei Anordnung von Raddrehungssensoren und bei Weiterbildung des Steuergerätes Radblockiergefahr an einem oder mehreren Fahrzeugrädern individuell durch bedingungsabhängiges automatisches Absenken von Radbremsdruck vermeidbar ist. Des weiteren besteht die Möglichkeit, ausgehend vom allgemein bekannten Stand der Antriebsschlupfregeltechnik, die Fahrzeugbremsanlage durch Steuern der ersten und der zweiten Ventile dazu zu benützen, an Fahrzeugrädern im Überschuß vorhandenes Antriebsdrehmoment zu kompensieren.

Die kennzeichnenden Merkmale des Anspruchs 5 ergeben den Vorteil, daß einerseits beim Erhöhen oder/und Konstanthalten von Radbremsdruck ein vorzeitiger und nachteiliger Druckmittelabfluß durch das zweite Ventil zum Reservoir vermieden wird und daß andererseits infolge eines gemeinsamen mittels des ersten Ventils und des zweiten Ventils einstellbaren gesamten Druckgefälles zwischen der Fremdenergiequelle bzw. deren Pumpe und dem Reservoir die Fremdenergiequelle bzw. deren Pumpe oder andere Elemente vor Überlastung schützbar sind. Je nach Abstimmung des zweiten Erregungsstromstellers oder des auf den zweiten Erregerstromsteller einwirkenden Reglers wird dann der in der Fremdenergiequelle herrschende Druck beispielsweise nur wenige bar höher sein als bei losgelassenem Bremspedal und dadurch geöffnetem zweiten Ventil, wobei das erste Ventil erfindungsgemäß die Funktion eines Pumpendruckregulierventils erfüllt.

Die kennzeichnenden Merkmale des Anspruchs 6 geben eine vorteilhafte Ausgestaltung des Steuergerätes an.

### Zeichnungen

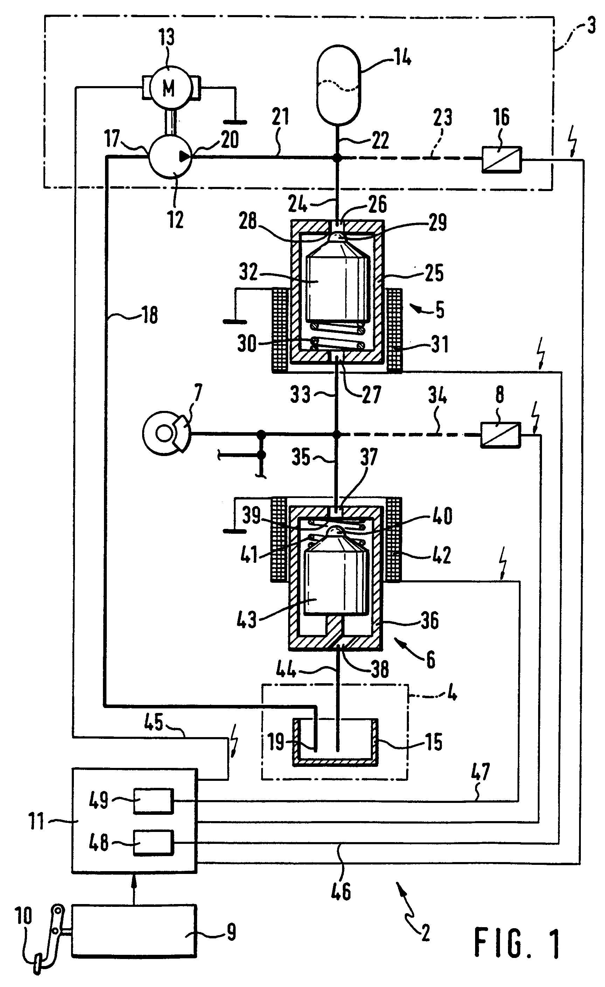

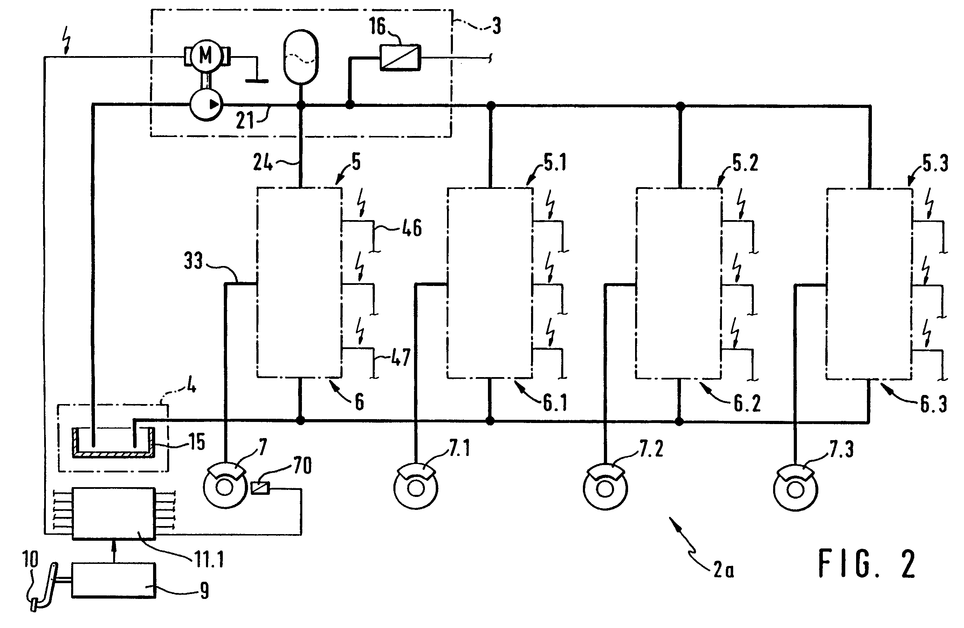

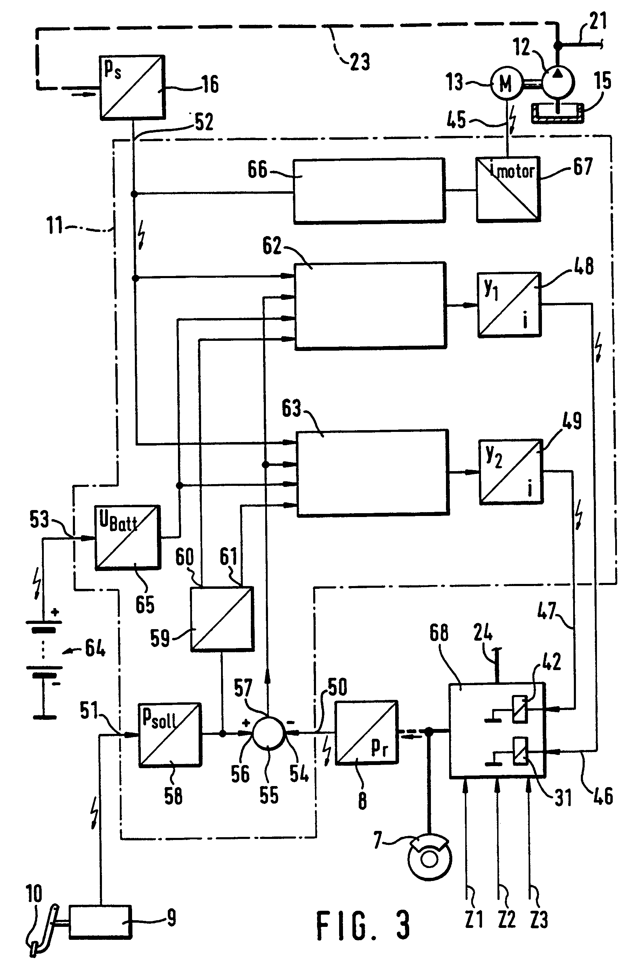

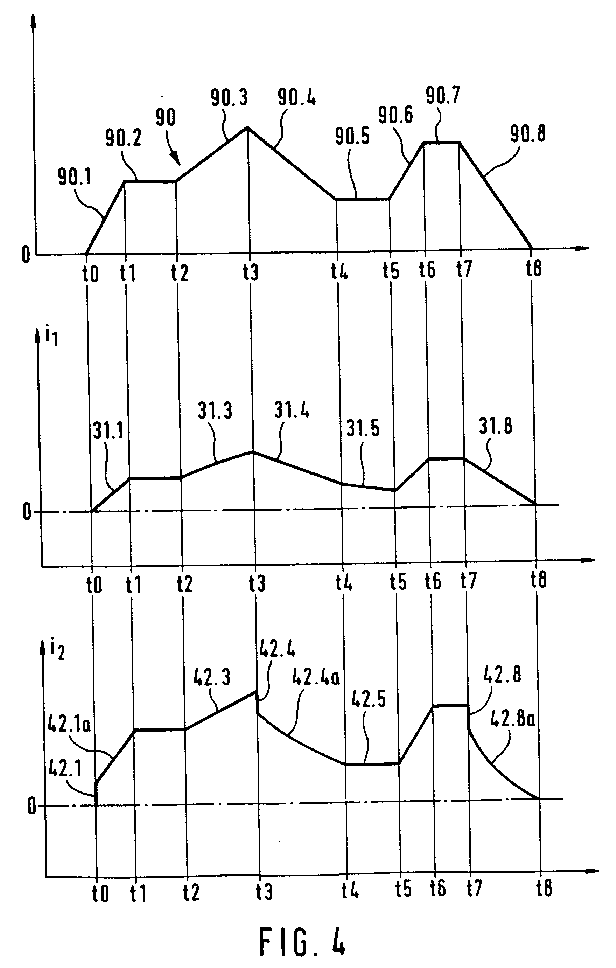

Zwei Ausführungsbeispiele der erfindungsgemäßen hydraulischen Fremdkraftfahrzeugbremsanlage sind in den Zeichnungen dargestellt und nachfolgend näher beschrieben. Es zeigen Figur 1 die hydraulische Schaltung eines ersten Ausführungsbeispiels der hydraulischen Fremdkraftfahrzeugbremsanlage, Figur 2 den Schaltplan eines zweiten Ausführungsbeispiels der erfindungsgemäßen Fremdkraftfahrzeugbremsanlage, Figur 3 ein Schaltungsprinzip für ein Steuergerät der erfindungsgemäßen Fremdkraftfahrzeugbremsanlage und Figur 4 ein beispielsweiser Radbremsdruckverlauf während eines Zeitabschnittes und dazu gehörende Erregungsströme für ein erstes und ein zweites Ventil der hydraulischen Fremdkraftfahrzeugbremsanlage gemäß der Figur 1.

### Beschreibung der Ausführungsbeispiele

Das erste Ausführungsbeispiel einer hydraulischen Fremdkraftfahrzeugbremsanlage 2 gemäß der Figur 1 hat eine Fremdenergiequelle 3, 4, ein erstes Ventil 5, ein zweites Ventil 6, zwischen dem ersten Ventil 5 und dem zweiten Ventil 6 angeschlossen wenigstens eine Radbremse 7 und einen Radbremsdrucksensor 8, einen Radbremsdrucksollwertgeber 9, ein Bremspedal 10 zum Einstellen des Radbremsdrucksollwertgebers 9 und ein Steuergerät 11.

Im Ausführungsbeispiel der Figur 1 besteht die Fremdenergiequelle 3, 4 aus einer Pumpe 12, einem Elektromotor 13 zum Antreiben der Pumpe 12, einem als Hydrospeicher ausgebildeten Fremdenergiespeicher 14, einem drucklosen Reservoir 15 für hydraulisches Druckmittel und einem Pumpendrucksensor 16. Ein Eingang 17 der Pumpe 12 ist mit einer Ansaugleitung 18 verbunden, deren Anfang 19 in das Reservoir 15 eintaucht. Ein Ausgang 20 der Pumpe 12 versorgt durch Druckleitungen 21 und 22 den dem Speichern der Fremdenergie dienenden Hydrospeicher 14, der beispielsweise als sogenannter Blasenspeicher mit einem Gaspolster ausgebildet sein kann. Mittels einer weiteren Druckleitung 23 ist der Pumpendrucksensor 16 an die Druckleitung 21 und damit den Ausgang 20 der Pumpe 12 angeschlossen. Von der Druckleitung 21 führt eine Druckleitung 24 heraus aus der Fremdenergiequelle 3 und hin zu dem ersten Ventil 5.

Das erste Ventil 5 besitzt ein Gehäuse 25 mit einer Einlaßöffnung 26 und einer Auslaßöffnung 27. Die Einlaßöffnung 26 mündet in einen Ventilsitz 28. Dem Ventilsitz 28 ist ein Schließkörper 29 zugeordnet. Beispielsweise ist der Schließkörper 29 in einem zur Anlage an dem Ventilsitz 28 bestimmten Bereich kugelig ausgebildet. Das Ventil 5 besitzt des weiteren eine Schließfeder 30, die den Schließkörper 29 gegen den Ventilsitz 28 drückt. In erfindungsgemäßer Weise ist diese Schließfeder 30 in Abstimmung zum Durchmesser des Ventilsitzes 28 derart ausgebildet und vorgespannt, daß sie die Funktion einer Sicherheitsventilfeder übernimmt und bei laufender Pumpe 12 deren Druck begrenzt oder bei stillstehender Pumpe 12 und einem Temperaturanstieg in dem Hydrospeicher 14 nachteiligen Druckanstieg vermeidet. Das Ventil 5 ist elektromagnetisch steuerbar und hat zu diesem Zweck wenigstens eine Erregerspule 31 und einen Anker 32. Von der Auslaßöffnung 27 des Ventils 5 geht eine Radbremsleitung 33 aus, die zu der wenigstens einen Radbremse 7 führt bzw. sich verzweigt. Mittels einer Sensorleitung 34 ist der Radbremsdrucksensor 8 an die Radbremsleitung 33 angeschlossen und kommuniziert deshalb mit der wenigstens einen Radbremse 7. Mit der wenigstens einen Radbremse 7 kommuniziert eine weitere Radbremsleitung 35.

Das zweite Ventil 6 besitzt ebenfalls ein Gehäuse 36, eine Einlaßöffnung 37 und eine Auslaßöffnung 38. Die Einlaßöffnung 37 ist mit der Radbremsleitung 35 verbunden und kommuniziert deshalb mit der wenigstens einen Radbremse 7 und dem Radbremsdrucksensor 8. Die Einlaßöffnung 37 mündet in einen zweiten Ventilsitz 39. Dem zweiten Ventilsitz 39 ist ein zweiter Schließkörper 40 zugeordnet. Des weiteren besitzt das Ventil 6 eine Öffnungsfeder 41, die das Ventil 6 zu öffnen vermag, aber möglichst schwach dimensioniert ist. Zum elektromagnetischen Steuern des Ventils 6 sind diesem wenigstens eine Erregerspule 42 und ein Anker 43 zugeordnet.

Damit die nachfolgende Funktionsbeschreibung der hydraulischen Fremdkraftfahrzeugbremsanlage 2 einfach und übersichtlich wird, soll beispielsweise der Ventilsitz 39 den gleichen Durchmesser wie der Ventilsitz 28 des zuerst genannten Ventils 5 haben. Auch soll der Schließkörper 40 des zweiten Ventils 6 identisch ausgebildet sein wie der Schließkörper 29 des ersten Ventils 5.

Von der Auslaßöffnung 38 des zweiten Ventils 6 geht eine Rückflußleitung 44 aus, die in das Reservoir 15 mündet.

Das Steuergerät 11, dessen Struktur später anhand der Figuren 3 näher erläutert wird, ist einerseits an den Radbremsdrucksensor 8 und andererseits an den Radbremsdrucksollwertgeber 9 angeschlossen. Des weiteren ist das Steuergerät 11 auch angeschlossen an den Pumpendrucksensor 16. Von dem Steuergerät 11 gehen elektrische Leitungen 45, 46, 47 aus. Die Leitung 45 führt zu dem Elektromotor 13 der Pumpe 12. Die elektrische Leitung 46 führt zu der Erregerspule 31 des ersten Ventils 5, und die elektrische Leitung 47 führt zu der Erregerspule 42 des zweiten Ventils 6. Im Vorgriff auf die Beschreibung der Figur 3 weist das Steuergerät 11 einen ersten Erregerstromsteller 48 auf, der mit der elektrischen Leitung 46 verbunden ist, und einen zweiten Erregerstromsteller 49, der mit der elektrischen Leitung 47 verbunden ist.

Analog zur beispielsweise identischen Ausbildung des Ventilsitzes 39 des zweiten Ventils 6 zum Ventilsitz 29 des ersten Ventils 5 ist die Erregerspule 42 des zweiten Ventils 6 identisch ausgebildet mit der Erregerspule 31 des ersten Ventils 5. Gleiches gilt für den Anker 43 bezüglich der magnetischen Eigenschaften.

### Funktionsweise der hydraulischen Fahrzeugbremsanlage 2:

Das Steuergerät 11 empfängt aus dem Pumpendrucksensor 16 ein Signal und erkennt dadurch, ob der Hydrospeicher 14 ausreichend gefüllt ist oder durch Einschalten des Elektromotors 23 und dadurch Antreiben der Pumpe 12 zu füllen ist. Im Beispiel spielt es an sich keine Rolle, ob der Pumpendrucksensor 16 ein einfach ausgebildeter Druckschalter vergleichbar demjenigen der DE 19 61 039 A1 ausgebildet ist oder ob der Pumpendrucksensor 16 ein dem von der Pumpe 12 erzeugten Druck proportionales Signal abgibt, das demgemäß für eine proportionale Stromversorgung des Elektromotors 13 die Grundlage sein kann.

Ist das Bremspedal 10 nicht betätigt, so ist der Radbremsdrucksollwertgeber 9 auf "Bremsdruck null" eingestellt, und das Steuergerät 11 bewirkt in den Erregerstromstellern 48 und 49 die "Erregerstromstärke null". Demgemäß befindet sich das zweite Ventil 6 in der dargestellten Offenstellung und das erste Ventil 5 bedingt in der gezeichneten Schließstellung. Die Offenstellung des zweiten Ventils 6 bewirkt, daß die wenigstens eine Radbremse 7 mit der Rückflußleitung 44 kommuniziert und dadurch drucklos ist. Dagegen belastet die Schließfeder 30 des ersten Ventils 5 mittelbar über den Anker 31 den Schließkörper 29, der einerseits innerhalb des Ventilsitzes 28 dem Druck der Fremdenergiequelle 3 ausgesetzt ist und andererseits einer sich ergebenden Axialkomponente einer gegebenenfalls vom Ventilsitz 28 ausgehenden Gegenkraft. Droht der Druck im Hydrospeicher 14 unzulässig anzusteigen entweder als Folge einer mangelhaften Funktion des Pumpendrucksensors 16 oder des Steuergerätes 11 oder aber bei stillstehender Pumpe 12 infolge Erwärmung des Hydrospeichers 14, so überwiegt eine durch den Querschnitt des Ventilsitzes 28 in Abhängigkeit des vorhandenen Druckes auf den Schließkörper 29 drückende Axialkraft die Kraft der erfindungsgemäß als Sicherheitsfeder ausgebildeten Feder 30 mit der Folge, daß durch Abheben des Schließkörpers 29 von dem Ventilsitz 28 Druckmittel durch die Einlaßöffnung 26 und die Auslaßöffnung 27 des ersten Ventils 5 und schließlich durch das offene zweite Ventil 6 und die Rückflußleitung 44 in das Reservoir 15 abströmt. Insoweit ist erkennbar, daß die erfindungsgemäße Ausbildung des ersten Ventils 5 wenigstens bei nichtbetätigtem Bremspedal 10 ein sonst übliches separat eingebautes Sicherheitsventil einspart.

Wird durch Betätigung des Bremspedals der Radbremsdrucksollwertgeber 9 verstellt, so daß willkürlich vom Fahrer einstellbar das Steuergerät 11 einen Bremsdrucksollwert erhält, wogegen aber noch mittels des Radbremsdrucksensors 8 der Radbremsdruck "null" gemeldet wird, so steuert das Steuergerät 11 den zweiten Erregerstromsteller 49 in der Weise, daß infolge des dadurch durch die elektrische Leitung 47 fließenden Erregerstromes die Erregerspule 42 ein Magnetfeld aufbaut und dadurch den Anker 43 gegen die Kraft der Öffnungsfeder 41 im Schließkörper 40 in den Ventilsitz 39 des zweiten Ventils 6 drückt. Des weiteren steuert das Steuergerät 11 auch den ersten Erregerstromsteller 48, so daß die Erregerspule 31 ein Magnetfeld erzeugt, das auf den Anker 32 wirkt, so daß dieser wenigstens einen Teil der Schließkraft der Schließfeder 30 kompensiert. Dies hat die erwünschte Folge, daß nur noch ein Teil der Schließkraft der Schließfeder 30 zur Verfügung steht zum Andrücken des Schließkörpers 29 gegen den Ventilsitz 28 und/oder als Kraft gegen eine hydraulische Belastung mit dem Druck der Fremdenergiequelle 3 multipliziert mit dem Querschnitt des Ventilsitzes 28. Die Erregung der Erregerspule 31 bewirkt also wenigstens vorübergehend ein Kraftungleichgewicht, das zum Entfernen des Schließkörpers 29 vom Ventilsitz 48 und dadurch zu einem Druckmittelfluß durch die Druckleitung 24, die Einlaßöffnung 26, das Gehäuse 25, die Auslaßöffnung 27 und die Radbremsleitung 33 hin in die wenigstens eine Radbremse 7 führt mit der Folge, daß in der wenigstens einen Radbremse 7 ein Radbremsdruckanstieg erfolgt und dadurch ein ursprünglich vorhandenes Druckgefälle zwischen der Einlaßöffnung 26 und der Auslaßöffnung 27 des ersten Ventils 5 kleiner wird, bis schließlich wegen der dadurch stromabseitigen hydraulischen Beaufschlagung des Schließkörpers die Schließfeder 30 in der Lage ist, den Ventilsitz 28 mittels des Schließkörpers 29 abzudichten. Der dabei bis zum Abdichten in der Radbremse 7 angestiegene Druck wirkt auch durch die Sensorleitung 34 in dem Radbremsdrucksensor 8, der ein dem sensierten Radbremsdruck zugeordnetes Istsignal dem Steuergerät 11 meldet. In einer später anhand der Figur 3 beschriebenen Weise ist das Steuergerät 11 derart ausgebildet, daß es durch Verstellung des ersten Erregerstromstellers 48 einen gegebenenfalls nicht ausreichend angestiegenen Radbremsdruckistwert erhöht durch verstärkte Steuerung des ersten Erregerstromstellers 48. Dabei ist das Steuergerät 11 auch derart eingerichtet, daß dem vom Fahrer gewählten Radbremsdrucksollwert zugeordnet der zweite Erregerstromsteller 49 der Erregerspule 42 einen Erregerstrom zuführt, der einen Radbremsdruck wenigstens in der Größe des Radbremsdrucksollwertes in dieser Radbremse 7 hält.

Erkennbar wird, daß bei ausreichend fest geschlossenem zweiten Ventil 6 ein Radbremsdruck um so höher ansteigt, je stärker der vom ersten Erregerstromsteller 48 ausgehende Erregerstrom eingestellt ist. Erkennbar ist aber auch, daß für einen hohen Radbremsdruck das zweite Ventil 6 mittels eines größeren Erregerstroms aus dem zweiten Erregerstromsteller 49 zuzuhalten ist als bei einem relativ kleinen Radbremsdruck.

Wenn der Fahrer mittels des Bremspedals 10 willkürlich den Bremsdrucksollwertgeber 9 auf einen kleineren Bremsdrucksollwert verstellt, so erkennt das Steuergerät 11, daß der Bremsdruckistwert, der von dem Bremsdrucksensor 8 dem Steuergerät 11 gemeldet wird, höher ist. Deshalb wird das Steuergerät 11 durch abgeschwächtes Steuern des zweiten Erregerstromstellers 49 die Zuhaltekraft im zweiten Ventil 6 vermindern, so daß durch das zweite Ventil 6 Druckmittel aus der Radbremse 7 zum Reservoir 15 abfließen kann.
Gleichzeitig wird das Steuergerät 11 auch auf den ersten Erregerstromsteller 48 abgeschwächt einwirken, so daß ein zwischen der Einlaßöffnung 26 und der Auslaßöffnung 27 des ersten Ventils 5 gegebenenfalls vorhandener Druckunterschied größer werden kann. Läßt der Fahrer willkürlich das Bremspedal 10 in seine Ausgangsposition zurück, so meldet der Radbremsdrucksollwertgeber 9 den "Radbremsdruck null" dem Steuergerät 11, so daß dieses in dem Sinne auf beide Erregerstromsteller 48 und 49 einwirkt, daß diese keinen Erregerstrom mehr abgeben. Damit ist wieder der Zustand erreicht, von dem die Funktionsbeschreibung ausging.

Nachfolgend ist anhand der Figur 3 ein Ausführungsbeispiel des Steuergerätes 11 beschrieben.

Das Steuergerät 11 hat einen ersten Eingang 50, einen zweiten Eingang 51 und einen dritten Eingang 52. Der erste Eingang 50 ist an den Radbremsdrucksensor 8 angeschlossen. Der zweite Eingang 51 ist an den Radbremsdrucksollwertgeber 9 angeschlossen. Zur Stromversorgung weist das Steuergerät 11 einen vierten Eingang 53 auf.

Der erste Eingang 50 ist beispielsweise mit einem ersten Eingang 54 eines Vergleichers 55 verbunden. Dieser Vergleicher 55 weist einen zweiten Eingang 56 sowie einen Ausgang 57 auf und ist beispielsweise in einer zum Stand der Technik gehörenden und deshalb nicht näher zu beschreibenden Weise ausgebildet. An den zweiten Eingang 51 des Steuergerätes 11 ist eine Anpaßeinheit 58 angeschlossen, die mit dem zweiten Eingang 56 des Vergleichers 55 elektrisch verbunden ist. Im Beispiel ist der Vergleicher 55 darauf eingerichtet, von dem Radbremsdrucksensor 8 ausgehende Istsignale zu verarbeiten. Infolge der Anordnung der Anpaßeinheit 58 sind aus Bremsdrucksollwertgeber 9 ausgegebene Signale, je nachdem wie der Bremsdrucksollwertgeber 9 gestaltet ist, anpaßbar auf die Größenordnung beispielsweise den Pegel von aus dem Radbremsdrucksensor 8 ausgebbaren Signalen oder/und die Signalart, die der Radbremsdrucksollwertgeber 8 liefern kann. Anders ausgedrückt: Beispielsweise kann der Radbremsdrucksensor 8 einem ihm zugeleiteten Radbremsdruck proportionale Spannungen an den Eingang 50 des Steuergerätes 11 liefern. Im Unterschied dazu kann beispielsweise der Bremsdrucksollwertgeber 9 entsprechend dem Stand der Technik ausgebildet sein zur Ausgabe digital codierter Bremsdrucksollwerte. In einem solchen Fall ist die Anpaßeinheit 58 als ein Digital-Analog-Wandler ausgebildet, so daß der Vergleicher 55 an beiden Eingängen 54 und 56 analoge Signale mit aufeinander abgestimmten Pegeln erhält. Unterscheiden sich die Signalgrößen am ersten Eingang 54 und am zweiten Eingang 56, so erscheint die Differenz am Ausgang 57.

Ein Differenzierer 59 ist direkt an den Bremsdrucksollwertgeber 9 oder wie in der Figur 3 dargestellt ausgangsseitig an die Anpaßeinheit 58 angeschlossen. In Anpassung an beispielsweise analoge Signale, die von der Anpaßeinheit 58 ausgegeben werden, ist der Differenzierer ein analoger Differenzierer, dessen wesentliches Element ein nicht dargestellter Kondensator und eine nicht dargestellte Meßschaltung sind. Dabei ist diese Meßschaltung beispielsweise so ausgebildet, daß sie bei größer werdenden Analogsignalen aus der Anpaßeinheit 58, die zu einem Aufladen des Kondensators führen, ein Signal "Bremsdruckanstieg" an einen Ausgang 61 leitet. In Umkehrung dazu ist die Meßschaltung derart eingerichtet, daß bei "Bremsdruck senken" von einem Ausgang 60 des Differenzierers 59 ein Signal ausgeht. Dieses Signal aus dem Ausgang 60 wird einem ersten Regler 62 zugeführt, an den der erste Erregerstromsteller 48 angeschlossen ist. Ein Signal "Bremsdruck erhöhen" aus dem Ausgang 61 wird einem zweiten Regler 63 zugeführt, an den der zweite Erregerstromsteller 49 angeschlossen ist. Die aus den Ausgängen 60 und 61 stammenden Signale werden dazu benützt, die beiden Regler 62 und 63 jeweils von einer ersten Steuercharakteristik auf eine zweite Steuercharakteristik umzuschalten. Als eine beispielsweise weitere auf die Regler 62 und 63 wirkende Größe wird durch den Eingang 52 ein Signal aus dem Pumpendrucksensor 16 zugeführt.

Der vierte Eingang 53 des Steuergerätes 11 ist beispielsweise mit einer Batterie 64 eines Fahrzeugs verbunden. Weil bekanntlich Batterien 64 der in Frage kommenden Art insbesondere unter unterschiedlicher Belastung keine konstant hohen Spannungen abgeben, schließt sich an den vierten Eingang 53 ein geregelter Spannungswandler 65 an, den man dem Stand der Technik entnehmen kann und deshalb nicht zu beschreiben braucht. Der Spannungswandler 65 versorgt wenigstens die beiden Regler 62 und 63 und in nicht dargestellter Weise auch beispielsweise die Erregerstromsteller 48 und 49, die beispielsweise in Form von steuerbaren Stromreglern ausgebildet sind.

An den dritten Eingang 52 und somit den Pumpendrucksensor 16 ist in dem Steuergerät 11 eine Pumpensteuer- bzw. Regeleinrichtung 66 angeschlossen. Die Pumpensteuereinrichtung 66 dient dazu, einen Motorstromsteller 67 derart zu steuern, daß dieser durch die Leitung 45 den Elektromotor 13 mit Strom versorgt zum Antreiben der Pumpe 12, damit diese durch die Leitung 21 den Hydrospeicher 14 lädt. Es ist nicht ausschließbar, daß beim Laden des Hydrospeichers 14 eine Druckveränderung in der Leitung 21 und damit auch in der Einlaßöffnung 26 des ersten Ventils 5 stattfindet. Dies ist der Grund, warum der Pumpendrucksensor 16 wie bereits beschrieben mit den beiden Reglern 62 und 63 verbunden sein kann. Die beiden Regler 62 und 63 sind dann in einer nicht beschriebenen Weise derart eingerichtet, daß sie per dem Pumpendrucksensor 16 gemeldete Druckverläufe als Druckschwankungen erkennen und bei der Regelarbeit berücksichtigen. Dies ist deshalb vorteilhaft, weil zum Erreichen eines vom Fahrer gewollten Radbremsdruckes der Erregerstromsteller 48 einen um so größeren Erregerstrom an das erste Ventil 5 liefern muß, je niedriger der momentan von der Pumpe 13 erzeugte oder im Hydrospeicher 14 vorhandene Fremdenergiedruck ist.

Es wurde bereits erwähnt, daß die beiden Regler 62 und 63 in an sich beliebiger Weise ausbildbar sind. Im Falle der Verwendung des beschriebenen analogen Vergleichers 55 wird man die beiden Regler 62 und 63 vorzugsweise als analoge Regler ausbilden. Es ist aber auch möglich, anstelle eines analogen Vergleichers 55 einen digitalen Vergleicher einzusetzen bzw. einen nicht dargestellten Computer innerhalb des Steuergeräts 11 unter Verwendung von in den Computer eingelagerter Software Eingangsgrößen von Sollwerten und Istwert per Rechnung miteinander zu vergleichen und die Abweichungen den Reglern 62 und 63 digital zuzuführen. Die Regler 62 und 63 selber sind in diesem Fall auch mittels eines Computers dargestellt und mit in dem Computer abgelegter Software betrieben. Je nach einer gewählten Struktur und der technischen Ausgestaltung des Computers kann eine zeitkontinuierliche Regelung oder aber eine zeitdiskrete Regelung stattfinden.

Der erste Regler 62, gleichgültig in welcher Bauart er ausgebildet ist, besitzt eine erste Regelcharakteristik, die dem Bremsdruckerhöhen dient, und eine zweite Charakteristik, die beim Bremsdruckabsenken wirksam wird. Auch der zweite Regler 63 besitzt eine erste Charakteristik, die allerdings beim Bremsdruckabsenken wirksam ist, und eine zweite Regelcharakteristik, die demgemäß beim Bremsdruckerhöhen wirksam wird.

### Funktionsweise des Steuergerätes 11:

Bei losgelassenem Bremspedal 10 erhält der Vergleicher 55 an beiden Eingängen 54 und 56 gleich große Signale, die beispielsweise dem Bremsdruckwert "null" entsprechen. Demgemäß wird am Ausgang 57 kein Differenzsignal erscheinen. Bei losgelassenem Bremspedal 10 findet keine Sollwertänderung statt, so daß an den Ausgängen 60 und 61 des Differenzierers 59 keine Steuersignale erscheinen. Unabhängig davon sorgt die Pumpensteuereinrichtung 66 in Abhängigkeit von einem aus dem Pumpendrucksensor 16 stammenden Signal, das, abhängig davon, ob der Pumpendruck unterhalb oder oberhalb eines vorgewählten Druckes liegt, vermittels des Motorstromstellers 67, daß dem Elektromotor 13 ein Strom zugeführt wird, damit der Elektromotor 13 die Pumpe 12 antreibt, um einen zu niedrigen Pumpendruck auf das gewünschte Maß zu steigern.

Wird von einem Fahrer das Bremspedal 10 betätigt, so meldet der Radbremsdrucksollwertgeber 9 der Anpaßeinheit 58 diesen Sollwert. Demgemäß wird die Anpaßeinheit 58 in der bereits beschriebenen Weise ein dem Sollwert zugeordnetes Signal dem zweiten Eingang 56 des Vergleichers 55 melden. Weil zunächst kein Radbremsdruck in der wenigstens einen Radbremse 7 vorhanden ist, wird demgemäß auch am ersten Eingang 54 des Vergleichers 55 ein gegenüber dem Sollwert zu niedriger Istwert vorliegen mit der Folge, daß der Vergleicher 55 in bereits angesprochener Weise durch den Ausgang 57 die Abweichung dem ersten Regler 62 und dem zweiten Regler 63 meldet. Mit dem Entstehen und dem Anwachsen eines Radbremsdrucksollwertes 9 einher geht auch das Umschalten des zweiten Reglers 63 auf die zweite Regelcharakteristik.

Der erste Regler 62 ist derart eingerichtet, daß er unter Benutzung seiner ersten Charakteristik die der angegebenen Differenz entsprechende Eingangsgröße als Signal zum Erhöhen von Bremsdruck bis zum Radbremsdrucksollwert verwendet. Der Regler 62 wird deshalb an dem ersten Erregerstromsteller 48 einen um so höheren Erregungsstrom einstellen, je höher der Radbremsdrucksollwert vom Fahrer gewählt ist. Den Stellererfolg, der von dem Radbremsdrucksensor 8 erkannt wird, meldet der Radbremsdrucksensor 8 dem ersten Eingang 54 des Vergleichers 55. Dementsprechend wird ein ursprünglich vorhandenes Differenzsignal am Ausgang 57 kleiner werden, und der Regler 62 wird das Verstellen des ersten Erregerstromstellers 48 beenden und die erreichte Einstellung beibehalten.

Gleichzeitig wird der zweite Regler 63 mit seiner zweiten Charakteristik betrieben. Die zweite Charakteristik des zweiten Reglers 63 ist dadurch gekennzeichnet, daß bei einer aus dem Ausgang 61 des Differenzierers 59 kommenden Tendenzanzeige "Bremsdruck erhöhen" dieser Regler 63 den zweiten Erregungsstromsteller 49 in der Weise steuert, daß dieser zweite Erregungsstromsteller 49 für einen bestimmten Radbremsdruck dem zweiten Ventil 6 einen überhöhten Erregungsstrom zuleitet. Dadurch wird vermieden, daß sich beim Bremsdruckerhöhen das zweite Ventil 6 ungewollt öffnet und daß dabei Druckmittelteilmengen, die durch das erste Ventil 5 zur Bremsdruckerhöhung in der Richtung wenigstens einer Radbremse 7 fließen sollen, nicht in diese Radbremse 7, sondern in das Reservoir 15 gelangen. Erkennbar ist auch hier wieder, daß die Sicherheit gegen ungewollten Abfluß von Druckmittel aus der Fremdenergiequelle 3 um so sicherer vermieden wird, je kräftiger das zweite Ventil 6 mittels Erregungsstromes aus dem zweiten Erregungsstromsteller 49 zugehalten wird. Aber auch hier soll das zweite Ventil 6 nicht zu stark zugehalten werden, denn sonst erfolgt dann, wenn die Pumpe 12 Druckmittel im Überschuß liefert, ein ungewollter Radbremsdruckanstieg mit der Folge von erhöhter Bremswirkung, was zwar durch den Fahrer per teilweises Zurücknehmen des Bremspedals 10 kompensierbar ist, aber auf eisglatter Fahrbahn gegebenenfalls sehr nachteilig sein kann. Es ist hier auch der zweite Regler 63 derart eingerichtet, daß ein Schließkraftüberschuß im zweiten Ventil 6 nicht zu groß ist. Ein solcher Schließkraftüberschuß ist dann auch schneller beseitigbar, wenn der Vergleicher 55 durch seinen Ausgang 57 die Regelabweichung "Radbremsdruck zu hoch" dem zweiten Regler 63 meldet.

Der jeweilige Unterschied zwischen einer Erregungsstromstärke beim Erhöhen auf einen bestimmten Radbremsdruck oder beim Absenken auf einen bestimmten Radbremsdruck kann also beispielsweise gewählt werden in Form eines im wesentlichen konstanten Unterschiedsbetrags oder aber in Form eines vorgewählten Faktors, so daß bei größeren Bremsdrücken auch größere Unterschiede bei den Erregungsströmen resultieren. Letzteres kann vorteilhaft sein, wenn die genannten Störgrößen relativ groß sind. Daß dabei bei kleinen Radbremsdrücken gegebenenfalls Druckmittel an sich ungenutzt aus der Fremdenergiequelle 3 zu dem Reservoir 15 abfließt, ist dabei relativ unbedeutend, denn zum Erzeugen von kleinen Radbremsdrücken wird nur ein Teil des für die Fremdenergiequelle 3 projektierten "Normaldruckes" und der Pumpenleistung benötigt.

Die Figur 4 zeigt im oberen Drittel über der Zeit ein willkürliches Beispiel für einen Radbremsdruckverlauf. Da dieser Verlauf durch Betätigung des Bremspedals 10 und damit dem Einstellen des Radbremsdrucksollwertgebers 9 folgt, ist der Verlauf mit 90 bezeichnet. Der Verlauf 90 beginnt irgendwann bei Radbremsdruck "Null" und endet im Beispiel zur Zeit t8 ebenfalls mit dem Radbremsdruck "Null". Zu einem ersten Stromanstieg 90.1 gehört ein erster elektrischer Stromanstieg 31.1, der im mittleren Drittel der Figur 4 dargestellt ist, für die Erregerspule 31. Dem vom ersten Regler 62 gesteuerten Stromanstieg 31.1 zugeordnet erzeugt der zweite Regler 63 zunächst einen Stromsprung 42.1, dem sich beispielsweise ein gegenüber dem Stromanstieg 31.1 steilerer Stromanstieg 42.1a für die Erregerspule 42 des zweiten Ventils anschließt. Hier wurde also Gebrauch gemacht von beiden vorher genannten Möglichkeiten der Überhöhung der Schließkraft des zweiten Ventils 6 beim Erzeugen eines Bremsdruckanstiegs. Im oberen Drittel der Figur 4 schließt sich an den Bremsdruckanstieg 90.1 eine Radbremsdruckhaltephase an, die durch einen waagerechten Strich 90.2 bezeichnet ist. Hierzu bedarf es keiner Änderung derjenigen Stromstärken, die den ersten Bremsdruckanstieg bewirkt haben. Es schließt sich ein zweiter Bremsdruckanstieg 90.3 an, zu dem gemäß dem mittleren Drittel der Figur 4 ein weiterer Stromanstieg 31.3 notwendig ist. Auch in der Erregerspule 42 des zweiten Ventils 6 ist ein Stromanstieg notwendig, der mit 42.3 bezeichnet ist. An dem zweiten Bremsdruckanstieg 90.3 schließt sich ein erster teilweiser Bremsdruckabsenkvorgang 90.4 an. Damit dieser zustandekommen kann, muß ein Schließkraftüberschuß im zweiten Ventil 6 beseitigt werden, was durch einen sehr steilen Stromabfall 42.4, also einen negativen Stromsprung und eine sich daran anschließende im wesentlichen stetige Erregungsstromstärkeverminderung 42.4a darstellt. Während dieses Vorganges soll im ersten Ventil 5 ein Schließkraftüberschuß vorhanden sein, wobei dieser Schließkraftüberschuß durch den relativ wenig geneigten Erregungsstromverlauf 31.4 im mittleren Drittel der Figur 4 angedeutet ist. An diese teilweise Bremsdruckabsenkung schließt sich eine Bremsdruckhaltephase an, die durch einen konstanten Strom zwischen den Zeitpunkten t4 und t5 mittels einer Geraden 42.5 dargestellt ist. Da während einer solchen Druckhaltephase zu erwarten ist, daß die Pumpe 12 Druckmittel im Überschuß liefert, ist erwünscht, daß dieser Druckmittelüberschuß ohne wesentliche Druckänderung in der Fremdenergiequelle 3 das Reservoir 15 erreicht. Hierzu kann zwischen den Zeiten t4 und t5 der Erregungsstrom für die Erregerspule 31 etwas abgesenkt werden, was mit einer wenig geneigten Geraden 31.5 im mittleren Drittel der Figur 4 zwischen den Zeitpunkten t4 und t5 charakterisiert ist. Ein darauf folgender dritter Bremsdruckanstieg 90.6 ab dem Zeitpunkt t5 ist im Prinzip in gleicher Weise erzeugbar wie der zweite Bremsdruckanstieg 90.3, da in beiden Fällen von einer Bremsdruckhaltephase ausgegangen wurde. Eine sich daran anschließende dritte Bremsdruckhaltephase 90.7 braucht nicht beschrieben zu werden, denn es liegt hier wiederum ein Übergang von einer Anstiegsphase in eine Haltephase vor, wie dies beim ersten Bremsdruckanstieg 90.1 in die erste Bremsdruckhaltephase 90.2 erfolgte. Eine nachfolgende Radbremsdruckabsenkung 90.8 auf den Wert null setzt ein vollständiges Schließen des ersten Ventils 5 voraus und demgemäß einen Erregungsstromverlauf 31.8 auf den Bezugswert "null". Damit bei dem zu Beginn des Bremsdruckabsenkvorganges vorhandenen Radbremsdruck ein erster Öffnungsvorgang des zweiten Ventils 6 zustandekommen kann, erfolgt eine sprungweise erste Stromabsenkung 90.8, an die sich eine geneigte Stromabsenkung 42.8a bis auf den Wert null anschließt.

Um, wie bereits in der Beschreibungseinleitung erwähnt und durch die US 3,802,745 bereits offenbart ist, zum Zwecke von an gebremsten Fahrzeugrädern unterschiedlich auftretender Radblockiergefahr die einzelnen Fahrzeugräder bedingungsabhängig automatisch bremsen zu können, können beispielsweise für vier Fahrzeugräder vier erste Ventile 5.1, 5,2, 5.3 und vier zweite Ventile 6, 6.1, 6.2 und 6.3 für vier Radbremsen 7, 7.1, 7.2 und 7.3 vorgesehen werden. Hierfür ist einem von der Radbremse 7 zur bremsenden, nicht dargestellten Fahrzeugrad ein Raddrehungssensor 70 zugeordnet und elektrisch mit dem zur automatischen Bremsschlupfregelung weitergebildeten Steuergerät 11.1 verbunden. Weil diese Weiterbildung ausgehend von dem Stand der Technik vorgenommen wird, sind den drei Radbremsen 7.1, 7.2 und 7.3 der übrigen Fahrzeugräder drei weitere Raddrehungssensoren 70.1, 70.2, 70.3 zugeordnet.

Für die in der Figur 2 dargestellte hydraulische Fahrzeugbremsanlage 2a mit dem zur Vermeidung von Radblockiergefahr weitergebildeten Steuergerät 11.1 wird bevorzugt Gebrauch gemacht von derjenigen Regelcharakteristik für den zweiten Regler 63, die für sprungweise Erhöhung von Erregungsstrom am Beginn einer Bremsung und für eine sprungweise Erregungsstromanpassung beim Einleiten einer Bremsdruckabsenkung arbeitet. Dies ergibt den Vorteil, daß bei geringen Bremsdruckänderungen, die beispielsweise im Blockierschutzbetrieb auftreten können und bei dem dadurch bedingten stetigen Verbrauch von Druckmittel aus der Fremdenergiequelle 3 ein bereits erwähntes nutzloses Abfließen von Druckmittel aus der Fremdenergiequelle in das Reservoir ausreichend vermieden wird.

Unter der bereits voranstehend beschriebenen Vereinfachung, daß die Ventilsitze 28 und 39 baugleich und auch die Erregerspulen 31 und 42 baugleich ausgebildet sind und die elektromagnetischen Eigenschaften der Anker 32 und 43 praktisch übereinstimmen, kann also zusammenfassend festgehalten werden, daß während eines Bremsdruckregelbetriebes, d. h. beim Erhöhen von Radbremsdruck durch Niedertreten des Bremspedals 10 und beim Absenken von Radbremsdruck durch Loslassen des Bremspedals 10, einem Erregerstrom der Erregerspule 31 des ersten Ventils 5 und einem Erregerstrom für die zweite Erregerspule 42 des zweiten Ventils 6 im wesentlichen gleich groß sein können. Abweichungen davon ergeben sich durch ungewollt niedrigen Pumpendruck, der Störgröße Z1 in der Figur 3 charakterisiert ist, und durch die Charakteristika des ersten Reglers 62 beim Bremsdruckabsenken und des zweiten Reglers 63 bei Bremsdruckanstieg.

Seither wurde davon ausgegangen, daß die Ventilsitze 28 und 39 baugleich sind. Wenn von einer solchen Baugleichheit abgewichen wird, ergeben sich natürlich auch Abweichungen in der Weise, daß der größer ausgebildete Ventilsitz stärkere Schließkräfte erfordert und demgemäß eine zugeordnete Erregerspule leistungsfähiger sein muß. Beispielsweise kann man den größeren Ventilsitz einem zweiten Ventil zuordnen, damit beispielsweise beim Fahren über eine vereiste Fahrbahn ein an sich schon niedriger Radbremsdruck besonders schnell absenkbar ist. In einem solchen Fall hat also das jeweils erste Ventil den engeren Ventilsitz, was nicht nachteilig sein muß, weil auch durch einen engen Ventilsitz hindurch mittels des relativ hohen Druckes der Fremdenergiequelle 3 zügige Radbremsdruckanstiege erzeugbar sind und weil zu schnelle Radbremsdruckanstiege im Antiblockierbetrieb störend wirken.

## Patentansprüche

1. Hydraulische Fremdkraftfahrzeugbremsanlage (2) mit einem Reservoir (15) für hydraulisches Druckmittel, mit einer aus dem Reservoir (15) versorgbaren Fremdenergiequelle (3), die eine von einem Motor (13) angetriebene Pumpe (12) und wenigstens ein den Druck der Pumpe (12) begrenzendes Mittel hat, mit wenigstens einer zwischen der Fremdenergiequelle (3) und wenigstens einer Radbremse (7) sowie dem Reservoir (15) angeordneten Ventilanordnung (5, 6), die elektrisch steuerbar ist und wenigstens eine Feder (30) aufweist, zum Trennen der Radbremse (7) von dem Reservoir (15) und zum Verbinden der Radbremse (4) mit der Fremdenergiequelle (3), mit einem der Radbremse (7) zugeordneten Radbremsdrucksensor (8), mit einem Bremspedal (10) und einem mittels diesem verstellbaren elektrischen Sollwertgeber (9) zur Wahl eines Radbremsdruckes, mit einem an den Sollwertgeber (9) und den Radbremsdrucksensor (8) angeschlossenen Steuergerät (11, 11.1), eingerichtet ist zum Vergleichen von Signalen aus dem Sollwertgeber (9) und dem Radbremsdrucksensor (8) und zum elektrischen Steuern der Ventilanordnung (5, 6) in Abhängigkeit vom Vergleichsergebnis, dadurch gekennzeichnet, daß die Ventilanordnung (5, 6) nach Sitzventilbauart ausgebildet ist und einen an die Fremdenergiequelle (3) angeschlossenen Ventilsitz (28) und einem von der Feder (30) gegen den Ventilsitz (28) drückbaren Schließkörper (29) hat, daß die Feder (30) als eine Sicherheitsventilfeder bemessen ist und das den Druck der Pumpe (12) begrenzende Mittel bildet, daß die Ventilanordnung (5, 6) wenigstens einen Elektromagnet (31, 32) aufweist, der bei einer Versorgung mit Erregungsstrom durch das Steuergerät (11, 11.1) gegen die Kraft der Feder (30) wirkt, und daß das Steuergerät (11) einen Erregungsstromsteller (48) aufweist, an den der Elektromagnet (31, 32) angeschlossen ist.

2. Hydraulische Fremdkraftfahrzeugbremsanlage nach Anspruch 1, dadurch gekennzeichnet, daß die Ventilanordnung (5, 6) einen mit der Radbremse (7) verbundenen zweiten Ventilsitz (39) und diesem zugeordnet einen zweiten Schließkörper (40) sowie einen dem zweiten Schließkörper (40) zugeordneten Elektromagnet (42, 43) aufweist zum Belasten des zweiten Schließkörpers (40) im Schließsinn gegen einen gegebenenfalls vorhandenen Radbremsdruck und daß das Steuergerät (11, 11.1) einen zweiten Erregungsstromsteller (49) aufweist und weitergebildet ist zum Steuern des zweiten Erregungsstromstellers (49) zum Einstellen von Radbremsdruck wenigstens während eines Radbremsdruckabsenkvorgangs.

3. Hydraulische Fremdkraftfahrzeugbremsanlage nach Anspruch 2, dadurch gekennzeichnet, daß der Ventilsitz (28) des ersten Ventils (5) und der Ventilsitz (31) des zweiten Ventils (6) im wesentlichen baugleich ausgebildet sind und daß das Steuergerät (11) eingerichtet ist zum Steuern des Erregungsstromes des zweiten Elektromagnets (42, 43) wenigstens in tendenzieller Abhängigkeit vom ersten Erregungsstrom in der Weise, daß im Bremsbetrieb beide Erregerströme im wesentlichen gleich groß sind.

4. Hydraulische Fremdkraftfahrzeugbremsanlage nach einem der Ansprüche 1 bis 3, dadurch gekennzeichnet, daß die hydraulische Fahrzeugbremsanlage (2a) wenigstens eine zusätzliche Ventilanordnung (5.1, 5.2, 5.3, 6.1, 6.2, 6.3) und wenigstens einen ersten zusätzlichen Erregungsstromsteller (48) und wenigstens einen zusätzlichen zweiten Erregungsstromsteller (49) aufweist.

5. Hydraulische Fremdkraftfahrzeugbremsanlage nach einem der Ansprüche 2 bis 4, dadurch gekennzeichnet, daß an den Radbremsdrucksollwertgeber (9) und den wenigstens einen Radbremsdrucksensor (8) ein Vergleicher (55) angeschlossen ist, der einen Ausgang (57) aufweist, daß an den Ausgang (57) des Vergleichers (55) ein auf den ersten Erregungsstromsteller (48) wirkender erster Regler (62) und ein auf den zweiten Erregungsstromsteller (49) wirkender zweiter Regler (63) angeschlossen sind, wobei der erste Regler (62) derart eingerichtet ist, daß er beim Verändern eines Sollwertes bei einer Bremsdruckabsenkung einen höheren Erregungsstrom abgibt als bei einer Bremsdruckerhöhung, und wobei der zweite Regler (63) derart eingerichtet ist, daß er bei einer Bremsdruckerhöhung während einer Bremsdruckabsenkung.

6. Hydraulische Fremdkraftfahrzeugbremsanlage nach Anspruch 5, dadurch gekennzeichnet, daß an den Radbremsdrucksollwertgeber (9) ein Differenzierer (59) angeschlossen ist, der ausgehend von einer Änderung von einem von dem Radbremsdrucksollwertgeber (9) ausgehenden Signal an wenigstens einem Ausgang (60, 61) "Bremsdruckerhöhung" oder "Bremsdruckabsenkung" anzeigt zur Umschaltung des ersten Reglers (62) und des zweiten Reglers (63) zur Steuerung der Erregungsstromsteller (48, 49) für Bremsdrucksteigerungen oder Bremsdrucksenkungen.

## Claims

1. Hydraulic vehicle power-brake system (2), with a reservoir (15) for hydraulic pressure medium, with a power source (3) which can be supplied from the reservoir (15) and which has a pump (12), driven by a motor (13), and at least means limiting the pressure of the pump (12), with at least one valve arrangement (5, 6) which is arranged between the power source (3) and at least one wheel brake (7) and the reservoir (15) and which can be controlled electrically and has at least one spring (30), for isolating the wheel brake (7) from the reservoir (15) and for connecting the wheel brake (7) to the power source (3), with a wheel brake pressure sensor (8) assigned to the wheel brake (7), with a brake pedal (10) and an electrical desired-value transmitter (9) adjustable by means of the latter and intended for selecting a wheel brake pressure, with a control unit (11, 11.1) which is connected to the desired-value transmitter (9) and the wheel brake pressure sensor (8) and which is designed to compare signals from the desired-value transmitter (9) and the wheel brake pressure sensor (8) and for electrically controlling the valve arrangement (5, 6) as a function of the comparison result, characterized in that the valve arrangement (5, 6) is designed according to the seat-valve type and has a value seat (28), connected to the power source (3), and a closing body (29) capable of being pressed against the valve seat (28) by the spring (30), in that the spring (30) is dimensioned as a safety-valve spring and forms the means limiting the pressure of the pump (12), in that the valve arrangement (5, 6) has at least one electromagnet (31, 32) which, when supplied with exciting current by the control unit (11, 11.1), acts counter to the force of the spring (30), and in that the control unit (11) has an exciting current adjuster (48), to which the electromagnet (31, 32) is connected.

2. Hydraulic vehicle power-brake system according to Claim 1, characterized in that the valve arrangement (5, 6) has a second valve seat (39), connected to the wheel brake (7), and, assigned to this second valve seat, a second closing body (40) as well as an electromagnet (42, 43) assigned to the second closing body (40), for loading the second closing body (40) in the closing direction counter to a wheel brake pressure which, if appropriate, is present, and in that the control unit (11, 11.1) has a second exciting current adjuster (49) and is developed so as to control the second exciting current adjuster (49) in order to adjust the wheel brake pressure at least during an operation to lower the wheel brake pressure.

3. Hydraulic vehicle power-brake system according to Claim 2, characterized in that the valve seat (20) of the first valve (5) and the valve seat (31) of the second valve (6) are of essentially identical design, and in that the control unit (11) is designed to control the exciting current of the second electromagnet (42, 43) at least as a tendential function of the first exciting current, in such a way that, in the braking mode, the two exciting currents are essentially equal.

4. Hydraulic vehicle power-brake system according to one of Claims 1 to 3, characterized in that the hydraulic vehicle brake system (2a) has at least one additional valve arrangement (5.1, 5.2, 5.3, 6.1, 6.2, 6.3) and at least one first additional exciting current adjuster (48) and at least one additional second exciting current adjuster (49).

5. Hydraulic vehicle power-brake system according to one of Claims 2 to 4, characterized in that a comparator (55), which has an output (57), is connected to the wheel brake pressure desired-value transmitter (9) and the at least one wheel brake pressure sensor (8), in that the output (57) of the comparator (55) has connected to it a first controller (62) acting on the first exciting current adjuster (48) and a second controller (63) acting on the second exciting current adjuster (49), the first controller (62) being designed in such a way that, when a desired value is changed, it transmits a higher exciting current in the case of a brake pressure reduction than in the case of a brake pressure increase, and the second controller (63) being designed in such a way that, in the event of a brake pressure increase, it [lacuna] during a brake pressure reduction.

6. Hydraulic vehicle power-brake system according to Claim 5, characterized in that the wheel brake pressure desired-value transmitter (9) has connected to it a differentiator (59) which, on the basis of a change in a signal coming from the wheel brake pressure desired-value transmitter (9), indicates "brake pressure increase" or "brake pressure reduction" at at least one output (60, 61), for changing over the first controller (62) and the second controller (63) in order to control the exciting current adjusters (48, 49) for brake pressure increases or brake pressure reductions.

## Revendications

1. Système hydraulique de freinage (2) pour véhicule, actionné par une force extérieure, comprenant un réservoir (15) pour un fluide hydraulique sous pression, une source d'énergie extérieure (3), qui peut être alimentée à partir du réservoir (15), et qui a une pompe (12) entraînée par un moteur (13) et au moins un moyen qui limite la pression de la pompe (12), avec au moins un dispositif de vannes (5, 6) disposé entre la source extérieure d'énergie (3) et au moins un frein de roue (7) ainsi que le réservoir (15), dispositif de vannes (5, 6), qui peut être commandé électriquement et qui présente au moins un ressort (30), pour séparer le frein de roue (7) du réservoir (15) et pour relier le frein de roue (7) à la source d'énergie extérieure (3), un détecteur de pression de frein de roue (8) associé au frein de roue (7), une pédale de frein (10) et capteur de valeur de consigne (9) électrique, réglable au moyen de celle-ci, pour choisir une pression de frein de roue, un appareil de commande (11, 11.1) raccordé au capteur de valeur de consigne (9) et au détecteur de pression de frein de roue (8), appareil de commande (11, 11.1) qui est conçu pour comparer des signaux provenant du capteur de valeur de consigne (9) et du détecteur de pression de frein de roue (8),et pour commander électriquement l'agencement de vanne (5, 6) en fonction du résultat de la comparaison,
caractérisé en en que
- le dispositif de vanne (5, 6) est constitué selon le type de construction de vannes à siège et a un siège de vanne (28), raccordé à la source extérieure d'énergie (3) et un corps d'obturation (29) qui peut être comprimé par le ressort (30) contre le siège de la vanne (28),
- le ressort (30) est dimensionné comme un ressort de vanne de sécurité, et constitue le moyen qui limite la pression de la pompe (12),
- le dispositif de vanne (5, 6) présente au moins un électroaimant (31, 32) qui agit lors qu'il est alimenté en courant d'excitation par l'appareil de commande (11, 11.1) à l'encontre de la force du ressort (30) et
- l'appareil de commande (11) présente un organe de réglage (48) du courant d'excitation, auquel est raccordé l'électroaimant (31, 32).

2. Système hydraulique de freinage pour véhicule, actionné par une force extérieure, selon la revendication 1,
caractérisé en ce que
- le dispositif de vanne (5, 6) présente un deuxième siège de vanne (39), relié au frein de roue (7) et associé à celui-ci un deuxième corps d'obturation (40) ainsi qu'un électroaimant (42, 43) associé au deuxième corps d'obturation (40) pour comprimer le deuxième corps d'obturation (40) dans le sens de sa fermeture à l'encontre d'une pression de frein de roue existant le cas échéant, et
- l'appareil de commande (11, 11.1) présente un deuxième organe de réglage (49) du courant d'excitation et est développé pour commander le deuxième organe de réglage (49) du courant d'excitation pour régler la pression de frein de roue au moins pendant un processus d'abaissement de la pression de frein de roue.

3. Système hydraulique de freinage pour véhicule, actionné par une force extérieure, selon la revendication 2,
caractérisé en ce que
- le siège de vanne (28) de la première vanne (5) et le siège de vanne (31) de la deuxième vanne (6) sont constitué avec sensiblement la même construction et
- l'appareil de commande (11) est conçu pour commander le courant d'excitation du deuxième électroaimant (42, 43) au moins en fonction de la tendance du premier courant d'excitation, d'une manière telle que pendant le freinage les deux courants d'excitation aient sensiblement la même grandeur.

4. Système hydraulique de freinage pour véhicule, actionné par une force extérieure, selon l'une des revendications 1 à 3,
caractérisé en ce que
le système hydraulique de freinage de véhicule (2a) présente au moins un dispositif additionnel de vannes (5.1, 5.2, 5.3, 6.1, 6.2, 6.3) et au moins un premier organe additionnel de réglage du courant d'excitation (48) et au moins un deuxième organe additionnel de réglage (49) du courant d'excitation.

5. Système hydraulique de freinage pour véhicule, actionné par une force extérieure, selon l'une des revendications 2 à 4,
caractérisé en ce que
- l'on raccorde un comparateur (55) au capteur (9) de la valeur de consigne de la pression de frein de roue et à au moins un détecteur (8) de la pression de frein de roue,
- l'on raccorde à la sortie (57) du comparateur (55) un premier appareil de réglage (62), qui agit sur le premier organe de réglage (48) du courant d'excitation et un deuxième appareil de réglage (63), qui agit sur le deuxième organe de réglage (49) du courant d'excitation, le premier appareil de réglage (62) étant disposé de telle manière qu'il délivre lors de la variation d'une valeur de consigne lors d'un abaissement de la pression de freinage un courant d'excitation plus élevé que lors d'une augmentation de la pression de freinage, et le deuxième appareil de réglage (63) étant disposé de telle manière, lors d'une augmentation de la pression de freinage, qu'il délivre une tension plus élevée d'excitation comme pendant l'abaissement de la pression, rapportée à la valeur de consigne

6. Système hydraulique de freinage pour véhicule, actionné par une force extérieure, selon la revendication 5,
caractérisé en ce que
l'on raccorde au capteur de valeur de consigne (9) de la pression de frein de roue un appareil différenciateur (59), qui en partant d'une variation d'un signal partant du capteur de valeur de consigne (9) de la pression de frein de roue indique sur au moins une sortie (60, 61) "augmentation de la pression de freinage" ou "abaissement de la pression de freinage" pour faire passer le premier appareil de réglage (62) et le deuxième appareil de réglage (63) à la commande des organes de réglage (48, 49) du courant d'excitation de façon à avoir des augmentations de la pression de freinage ou des abaissements de la pression de freinage.
